# EUROPÄISCHE PATENTSCHRIFT

(11) **EP 2 985 482 B1**
(45) Veröffentlichungstag und Bekanntmachung des Hinweises auf die Patenterteilung: **18.10.2017**
(21) Anmeldenummer: 15160118.4
(22) Anmeldetag: 20.03.2015
(51) Int. Cl.: F16D 23/14, F16C 33/78

(54) **SELBSTJUSTIERENDES AUSRÜCKLAGER**
SELF-ALIGNED RELEASE BEARING
BUTÉE DE DÉBRAYAGE AUTO-RÉGLABLE

(30) Priorität: 13.08.2014 DE 102014111593
(43) Veröffentlichungstag der Anmeldung: 17.02.2016
(73) Patentinhaber: Abu-Snima, Khalid, Dr., 97520 Röthlein (DE)
(72) Erfinder: Abu-Snima, Khalid, Dr., 97520 Röthlein (DE)
(74) Vertreter: Pöhner, Wilfried Anton

(56) Entgegenhaltungen:
- EP-A1- 2 287 486
- DE-A1- 3 611 602
- DE-A1- 19 503 217
- DE-A1-102010 015 200
- FR-A1- 2 661 470

## Beschreibung

Die Erfindung betrifft eine Ausrückvorrichtung für eine Reibungskupplung eines Kraftfahrzeuges, umfassend ein Führungsrohr, eine Schiebehülse, welche auf dem Führungsrohr axial verschiebbar ist und wenigstens eine radiale und axiale Öffnung umfasst, einen Halteabschnitt, an welchem ein Halteblech befestigt ist, welches ein selbstjustierendes Ausrücklager an einen Flansch der Schiebehülse drückt und wenigstens eine radiale Öffnung umfasst, das Ausrücklager, welches einen drehfest zu der Schiebehülse angeordneten äußeren Lagerring, zwischen dem äußeren und einem inneren Lagerring angeordnete Wälzkörper und einen umlaufenden inneren Lagerring umfasst, wobei der innere Lagerring mit einem Betätigungselement der Reibungskupplung in Wirkverbindung steht, eine Schleuderscheibe, welche mit dem inneren Lagerring verbunden ist und ein erstes und zweites Dichtelement, welche mit dem äußeren Lagerring verbunden sind.

Eine Reibungskupplung wird hauptsächlich in Kraftfahrzeuge eingebaut, um den Kraftfluss zwischen einem Motor und einem Getriebe beim Anfahren bzw. Gangwechsel zu trennen und zu schließen. Sie kann mechanisch, hydraulisch oder elektrisch betätigt werden und besteht aus einer Kupplungsscheibe, die von einer oder mehreren Federn mit einer Druckplatte an die Schwungscheibe des Motors gepresst wird. Beim Betätigen der Kupplung wird der Federdruck vom Ausrückhebel überwunden, so dass die Scheibe frei drehen kann und die Kupplung getrennt ist.

Die Reibungskupplung ist im Betrieb schaltbar und nutzt den Reibungswiderstand zwischen zwei Platten, um Kräfte von einer Platte auf eine andere zu übertragen. Daher leistet die Kupplung eine große Reibarbeit, was zu einem starken mechanischen Abrieb der Kupplung führt, welcher durch die Betriebsbedingungen bestimmt ist und deshalb nur unwesentlich beeinflusst werden kann. Dazu kommt die thermische Belastung der Kupplung.

Ausrückvorrichtungen zur Betätigung einer Reibungskupplung eines Kraftfahrzeuges umfassen als einen hauptsächlichen Bestandteil ein als Wälzlager ausgeführtes Ausrücklager. Das Ausrücklager wird im Antriebsstrang von Kraftfahrzeugen eingesetzt. Um eine möglichst lange Lebensdauer dieses Ausrücklagers zu gewährleisten, ist eine sorgfältige Abdichtung des Lagerinnenraums erforderlich. In dem Lagerinnenraum stehen die Wälzkörper mit den Laufbahnen des Lagers im kraftübertragenden Wälzkontakt. Typischerweise sind dafür unmittelbar am Wälzlager bzw. an zu dem Lager benachbarten Bauteilen berührende und/oder berührungsfreie Dichtungsanordnungen vorgesehen. Derartige Dichtungsanordnungen sind meist Elastomer- und/oder Labyrinthdichtungen, welche zusätzlich mit einem Sperrmittel gefüllte Aufnahmebereiche umfassen können. Die Hauptfunktion der Dichtungsanordnung ist einerseits die Vermeidung ein Schmierstoffaustritts und andererseits die Reduzierung eines Schmutz- bzw. Feuchtigkeitseintritts in den Lagerinnenraum. Bei berührenden Dichtungen ist jedoch ein Verschleiß unvermeidlich.

Zusätzlich zu dem Staub aus mechanischem Abrieb sind die Lager der Kupplung durch Feuchtigkeit, Schwebstoffe und andere Schmutzpartikel aus der Umgebungsluft belastet. Dies ist besonders bei Wälzlagerdichtungen in Kraftfahrzeugen gegeben, welche außerordentlich großen Staub- und Schmutzmengen ausgesetzt sind, wie dies u. a. im Straßen- und Bergbau, sowie der Land- und Forstwirtschaft der Fall ist.
Die in der Umgebungsluft enthaltenen Stäube und Schwebestoffe gelangen leicht in die Getriebeglocke und werden dort mit der zirkulierenden Luft unmittelbar an die Kuppelungsausrückvorrichtung transportiert. Dort lagern sich diese gemeinsam mit dem ohnehin vorhandenen Kupplungsabrieb ab, bevorzugt an den Dichtelementen des Ausrücklagers. Aufgrund der schwellenden Axialbelastung eines Ausrücklagers und der verschleißfördernden Aggressivität der Stäube und Schwebestoffe kommt es zu einer fortwährenden Verminderung der Wirksamkeit der Dichtsysteme des Lagers. Dies führt dazu, dass diese alsbald nicht mehr funktionieren, was schlussendlich zum Ausfall des Ausrücklagers und damit der gesamten Reibungskupplung führen kann.

Gattungsgemäße Wälzlager für eine Ausrückvorrichtung zum Betätigen einer Reibungskupplung eines Kraftfahrzeuges sind in der EP 1 734 270 B1 und DE 10 2005 026 246 A1 offenbart. Bei den offenbarten Ausrückvorrichtungen wird der Schmutzeintritt in dem Ausrücklager durch ein Sperrmittel abgefangen, welches in einen zwischen dem umlaufenden Lagerring und der Schiebehülse gebildeten Aufnahmebereich eingebracht ist.

Problematisch bei den vorgeschlagenen Ausrückvorrichtungen ist jedoch, dass das Sperrmittel bei einer radialen Selbstjustierung des Ausrücklagers schrittweise aus dem Aufnahmebereich herausgedrückt werden kann. Zudem kann sich die Sperrmittelschicht auch von einem der Bauteile lösen, wodurch der Eintritt von Stäuben und Schwebestoffen ermöglicht wird.
Das Sperrmittel kann zudem direkt von den Stäuben und Schwebstoffen, welche sich in und an dem Ausrücklager sammeln, angegriffen werden. Dadurch wird die Sperrmittel-Eigenschaft negativ beeinflusst, so dass das Sperrmittel allmählich zum hauptsächlichen Störfaktor für die Hauptdichtung wird.

Vor dem Hintergrund, eine Ausrückvorrichtung für eine Kraftfahrzeugreibungskupplung mit einem selbstjustierenden Ausrücklager bereitzustellen, welches auch unter extremen äußeren Bedingungen zuverlässig geschützt ist und eine hohe Lebensdauer erzielt, schlägt die DE 10 2008 012 815 A1 vor, dass das Ausrücklager ein Deckelement aufweist. Das Deckelement ist an dem äußeren, drehfesten Lagerring festgelegt und überdeckt einen zwischen den Lagerringen befindlichen Zugangsbereich des Lagerinnenraumes. Zusätzlich wird zwischen dem Deckelement und dem umlaufenden Lagerring ein mit einem Sperrmittel gefüllter Aufnahmebereich ausgebildet. Das Sperrmittel fungiert als vorgelagerte Dichtung und blockiert den Eintritt von Schmutz in das Ausrücklager. Aufgrund der Anordnung des Deckelements wird bei der Selbstjustierung des Ausrücklagers die Form des mit Sperrmittels befüllten Aufnahmebereichs nicht beeinflusst. Auf diese Weise wird die Staub- und Schwebstoffbelastung des Dichtsystems stark reduziert.
Allerdings kommt es auch bei der hier vorgeschlagenen Lösung dazu, dass das Sperrmittel direkt von den groben Stäuben und Schwebstoffen angegriffen wird, so dass die Sperrmittel-Eigenschaft negativ beeinflusst wird. Weiterhin wird das Sperrmittel aufgrund der undefinierten Form des Aufnahmebereichs und dem Fliehkraft-Effekt entlang der Deckelementinnenseite radial nach außen wandern, so dass sich die Menge an Sperrmittel kontinuierlich verringert. Dies ermöglicht allmählich der Eintritt von Fremdpartikeln in das Ausrücklager. Auf diese Weise wird daher lediglich Zeit bis zum verschleißbedingten Ausfall des Ausrücklagers gewonnen.

Da es für die Lebensdauer von Wälzlagern von entscheidender Bedeutung ist, deren Lagerinnenraum von äußeren Umwelteinflüssen zu schützen, wird auf aktuellem Stand der Technik zudem versucht, Dichtungen bzw. die Möglichkeit der Bildung von Aufnahmen für Sperrmittel zu optimieren. Dies kann unter anderem durch eine berührungsfreie Labyrinthdichtung geschehen, wie in der DE 10 2012 215 967 A1 vorgeschlagen. Die Labyrinthdichtung ist mit einer Fangrinne für Verunreinigungen ausgestattet und ist durch eine Schleuderscheibe geschützt. Die Fangrinne schützt das Ausrücklager vor flüssigen und festen Verunreinigungen, indem diese zuverlässig und schnell abgeleitet werden. Auf diese Weise reduziert sich der Wartungsaufwand des Wälzlagers deutlich.
Allerdings ergibt sich damit das Problem, dass die Fangrinne bei fortdauernder Einwirkung von Schmutz und Feuchtigkeit, besonders in extrem schwebstoff- und staubbelasteten Gebieten, verstopfen kann. Bei einer verstopften Fangrinne ist der Schmutzaustrieb derart vermindert wird, dass Schmutz ins Ausrücklager gelangen kann, was zu ausfallbedingten Wartungs- und Reparaturarbeiten des Lagers führt.

Auf aktuellem Stand der Technik wird des Weiteren versucht, die Lebensdauer von Ausrücklagern dadurch zu verlängern, dass gezielt Ablagerungsbereiche für Fremdstoffe vorgesehen werden, welche in einem Zirkulationsbereich der Fremdstoffe angeordnet sind. Diesbezüglich ist auf die Offenlegungsschrift EP 1 734 271 A1 zu verweisen, welche vorschlägt, Staubablagerungen mittels Strömungskanälen gezielt von dem Ausrücklager wegzuleiten und in einem vorgesehenen Bereich zu deponieren. Die Ablagerung dieser Stoffe kann zudem dadurch verbessert werden, wenn die Bereiche mit einem Haftmittel versehen werden.

Hierbei ergibt sich allerdings das Problem, dass die mit Haftmittel versehenen Bereiche insbesondere in extrem staub- und schmutzbelasteten Gebieten schnell voll sind oder die Kanäle aufgrund der Deponierung der wegzuleitenden Fremdstoffe verstopfen. Dann können die Fremdstoffe wieder ins Ausrücklager gelangen, was zu ausfallbedingten Wartungs- und Reparaturarbeiten führt. Eine weitere gattungsgemäße Ausrückvorrichtung für eine Reibungskupplung eines Kraftfahrzeuges ist z.B. aus DE 36 11 602 A1 bekannt. Es besteht daher ein großer Bedarf an einer Ausrückvorrichtung für eine Reibungskupplung eines Kraftfahrzeuges mit einem selbstjustierendem Ausrücklager, welches zuverlässig und lang anhaltend gegen Verschmutzungen, wie Schwebestoffe, Stäube und Feuchtigkeitseintritt, geschützt ist. Es ist daher von großer Bedeutung ein Ausrücklager so gut abzudichten, dass die Schmutzpartikelmenge lokal, d.h. im Bereich des Lagerinneren, maximal reduziert wird und dass die Abdichtung einem möglichst geringen eigenen Verschleiß unterworfen ist. Ausgehend von diesem Punkt hat sich die Erfindung daher die Aufgabe gestellt, Wälzlager bereitzustellen, dessen Dichtelemente auch unter extremen äußeren und verschleißfördernden Bedingungen längere Lebenszeiten des Ausrücklagers und damit geringere Ausfallzeiten und Reparatur- bzw. Wartungskosten sicherstellen.

Ein weiterer Aspekt, um die Lebensdauer des Ausrücklagers zu verlängern, ist, die im Lager entstehende Hitze nach außen abzutransportieren, da die nicht abgeführte Wärme die Lebensdauer des Lagers negativ beeinflusst. Bei den auf aktuellem Stand der Technik bekannten Vorschlägen für Dichtanordnungen bzw. Dichtsysteme in Ausrücklagern wird dieses Problem nicht thematisiert. Diese werden hingegen beispielsweise durch eine Schiebehülse stark abgekapselt, was zu einer Verminderung der Wärmeabfuhr führt. Daher hat sich die Erfindung des Weiteren die Aufgabe gestellt, das Wälzlager gezielt zu kühlen und die überschüssige Wärme in die Umgebung abzuleiten.

Aufgabe der Erfindung ist es also, eine Ausrückvorrichtung für eine Reibungskupplung eines Kraftfahrzeuges bereitzustellen, dessen ausfallbedingte Reparatur- und Wartungszeiten auf ein Minimum reduziert werden, indem das Ausrücklager zuverlässig und langlebig gegen in das Lagerinnere eindringende Verschmutzungen und austretende Schmierstoffen geschützt wird. Zudem wird die am Ausrücklager entstehende Wärme zuverlässig abgeleitet, was die Lebenszeit des Lagers zusätzlich erhöht.

Diese Aufgabe wird durch die Ausrückvorrichtung für eine Reibungskupplung eines Kraftfahrzeuges mit den Merkmalen des unabhängigen Anspruchs gelöst, insbesondere indem die Schleuderscheibe mit dem Flansch der Schiebehülse einen umlaufenden Spalt ausbildet, die Schleuderscheibe eine konzentrische Strömung innerhalb der Ausrückvorrichtung erzeugt und das erste Dichtelement mit dem inneren Lagerring und der Schleuderscheibe eine Dichtstruktur ausbildet. Vorteilhafte Weiterbildungen der Erfindung, welche einzeln oder in Kombination realisierbar sind, sind in den Unteransprüchen dargestellt.

Es wird eine Ausrückvorrichtung für eine Reibungskupplung eines Kraftfahrzeuges vorgeschlagen, welche ein Führungsrohr, eine auf dem Führungsrohr axial verschiebbaren Schiebehülse, einen Halteabschnitt, an welchem ein Halteblech befestigt ist, ein selbstjustierendes Ausrücklager, eine Schleuderscheibe und ein erstes und zweites Dichtelement umfasst. Die Ausrückvorrichtung kann in gezogener oder gedrückter Bauweise gebaut werden.

Unter dem Begriff "Schiebehülse" versteht sich eine auf dem Führungsrohr axial verschiebbare Hülse. Die Schiebehülse ist aus einem beliebigen Material herstellbar, dies ist jedoch im Rahmen der Erfindung nicht wesentlich. Diese ist zusätzlich zu ihrer zentrischen Öffnung mit weiteren Öffnungen versehen, wobei diese Öffnungen funktionale Öffnungen für die Erhöhung der Luftzirkulation und/oder den Abtransport von Verschmutzungen bzw. Wärme sind. Diese sind am Außenrand der Schiebehülse angeordnet.
Die Öffnungen sind radial und axial ausgerichtet. Bevorzugt umfasst die Schiebehülse wenigstens eine radiale und axiale Öffnung. Bevorzugt sind die radiale und axiale Öffnung in Höhe des Ausrücklagers angeordnet. Bevorzugt umfasst die Schiebehülse für ein gezogenes Ausrücklager wenigstens zwei radiale Öffnungen und eine axiale Öffnung. Für ein gedrücktes Ausrücklager umfasst die Schiebehülse bevorzugt eine radiale Öffnung und wenigstens zwei axiale Öffnungen.

Die radialen Öffnungen sind bevorzugt derart ausgestaltet, dass sich diese nach außen verjüngen, um so sicherzustellen, dass Schmutz aufgrund seines eigenen Gewichtes und/oder Wärme nach außen aus dem Ausrücklager geleitet werden. Gleichzeitig wird aufgrund der besonderen Ausgestaltung der Öffnungen und der Zentrifugalkraftströmung der Schleuderscheibe damit auch der Schmutzeintrag in das Ausrücklager verringert.
Natürlich können derartige radiale Öffnungen auch an anderen Stellen der Ausrückvorrichtung angebracht sein.

Die axiale Öffnung ist so ausgestaltet, dass sich diese nach außen verjüngt. Somit wird hauptsächlich Wärme über eine nach außen enger werdende, trichterförmige Öffnung aus dem Ausrücklager ausgeleitet. Natürlich kann nicht verhindert werden, dass auch Schmutz über die axiale Öffnung aus dem Ausrücklager nach außen abtransportiert wird. Die abgeleitete Menge an Schmutz ist allerdings zu vernachlässigen, da dieser aufgrund seines eigenen Gewichtes und über die Zentrifugalkraft bevorzugt über die radialen Öffnungen ausgeleitet wird.
Die besondere Ausgestaltung der axialen Öffnung der Schiebehülse in Trichterform und die Zentrifugalkraftströmung bieten zudem den Vorteil, dass nur sehr wenig Schmutz von außen nach innen gelangen kann.

Die Schiebehülse kann zudem eine eingebrachte Nut aufweisen, welche die Montage des Halteblechs erleichtert und sicherstellt, dass in das Lager einfallender Schmutz gleich wieder aus dem Lager austransportiert wird.

Der Begriff "Halteabschnitt" betrifft einen Abschnitt, an welchem ein Halteblech befestigt ist, welches ein selbstjustierendes Ausrücklager an einen Flansch der Schiebehülse drückt. Zwischen diesem Flansch und dem äußeren Lagerring des Ausrücklagers befindet sich ein Federelement. Bevorzugt ist der Flansch ein Radialflansch.
Das Halteblech ist an der Außenumfangsfläche des Haltebereichs verrollt und erstreckt sich unter Einfluss eines radialen Justierspaltes axial über das Ausrücklager. Das Halteblech greift an der von dem Haltebereich abgewandten Stirnseite des radial äußeren, drehfesten Lagerrings an das Ausrücklager an.

Bevorzugt umfasst das Halteblech wenigstens eine radiale Öffnung, welche am Außenrand des Halteblechs angeordnet ist. Über diese radiale Öffnung wird mittels der von der Schleuderscheibe erzeugten Zentrifugalkraft Schmutz und/oder Wärme nach außen aus dem Ausrücklager geleitet. Der Schmutz wird zudem aufgrund seines eigenen Gewichtes nach außen geleitet. Somit wird erreicht, dass der Schmutzeintrag in das Ausrücklager deutlich verringert bzw. vermieden wird.
Es versteht sich, dass wenigstens eine weitere derartige radiale Öffnung auch an einer anderen Stelle der Ausrückvorrichtung angebracht sein kann.

Unter dem Begriff "Ausrücklager" versteht sich ein Ausrück- oder Wälzlager, welches einen drehfest zu einer Schiebehülse angeordneten äußeren Lagerring, zwischen dem äußeren und einem inneren Lagerring angeordnete Wälzkörper und einen umlaufenden inneren Lagerring umfasst. Der innere Lagerring ist mittels eines Axialfortsatzes über das Ausrücklager hinaus verlängerbar und steht mit einem Betätigungselement der Reibungskupplung in Wirkverbindung. Bevorzugt ist das Ausrücklager selbstjustierend ausgestaltet, d.h. es zentriert sich selbst in radialer Ausrichtung auf der Kurbelwelle. Der Fachmann weis dies zu realisieren.

Der Begriff "Schleuderscheibe" betrifft eine fest verbaute, kreisringförmige Scheibe, welche mit dem inneren Lagerring verbunden ist. Bevorzugt ist die Schleuderscheibe an der von der Wälzkörperlaufbahn abgewandten Umfangsfläche des drehenden inneren Lagerrings fixiert und umschließt eine von dessen Stirnseiten. Die Schleuderscheibe ist derart ausgebildet, dass diese mit dem Flansch der Schiebehülse einen umlaufenden Spalt bildet, durch welchem Verschmutzungen und Wärme abgeleitet werden.
Die Schleuderschiebe kann aus einem beliebigen Material bestehen und verschiedene Formen aufweisen.

Die Schleuderscheibe erzeugt bevorzugt eine konzentrische Strömung innerhalb der Ausrückvorrichtung, welche durch die Zentrifugalkraft radial nach außen abgelenkt wird. Mit dieser Strömung wird somit Wärme und Schmutz abtransportiert bzw. mitgerissen. Bevorzugt führt die Strömung dazu, dass Verschmutzungen aus dem Ausrücklager über die radiale Öffnung der Schiebehülse und/oder die radiale Öffnung des Halteblechs nach außen abtransportiert bzw. mitgerissen werden. Zudem reißt die Strömung Wärme aus dem Ausrücklager über die radiale und/oder axiale Öffnung der Schiebehülse und/oder die radiale Öffnung des Halteblechs mit.

Der Begriff "Dichtelement" betrifft ein Mittel zur Abdichtung des Ausrücklagers. Bevorzugt umfasst die Ausrückvorrichtung zwei Dichtelemente. Das erste Dichtelement dichtet den Wälzkörperraum zur der Innenseite des Ausrücklagers ab, wohingegen das zweite Dichtelement den Wälzkörperraum zur Außenseite des Ausrücklagers abdichtet. Beide Dichtelemente sind mit dem äußeren Lagerring verbunden und bilden bevorzugt eine Labyrinthdichtung aus. Bevorzugt sind die Dichtelemente vulkanisiert und fixiert.

Bevorzugt bildet das erste Dichtelement mit dem inneren Lagerring auf der einen Seite und der Schleuderscheibe auf der anderen Seite eine Dichtstruktur aus, welche das Ausrücklager zuverlässig vor eindringenden Fremdpartikeln bzw. Feuchtigkeit schützt.

Der Schutz des Ausrücklagers basiert darauf, dass mittels der von der Schleuderscheibe erzeugten Zentrifugalkraftströmung und des eigenen Gewichtes der Fremdpartikel, Schwebstoffe und Stäube, diese über die radiale und/oder axiale Öffnung der Schiebehülse nach außen abtransportiert werden. Auf diese Weise wird bereits eine hohe Abschirmung des Ausrücklagers erreicht.
Es kann jedoch der Fall auftreten, dass dennoch Schwebstoffe bzw. Stäube aufgrund der Bewegung des Lagerinneren über einen Kapillarspalt nach innen wandern. Der Kapillarspalt ist derart realisiert, dass sich dessen begrenzende Flächen, d.h. der umlaufende innere Lagerring und der feststehende äußere Lagerring, gerade nicht berühren und dieser von dem Justagevorgang des Ausrücklagers nicht beeinflusst wird. Der Kapillarspalt erweitert sich in axialer Richtung zu dem ersten Dichtelement, welches die Schwebstoffe bzw. Stäube aufhält und wenigstens eine Dichtlippe aufweist. Zudem schützt das erste Dichtelement das Ausrücklager vor ausdringenden Schmierstoffen. Bevorzugt sind wenigsten zwei Dichtlippen umfasst, noch mehr bevorzugt drei Dichtlippen.

Auf der Außenseite des Ausrücklagers ist die Belastung der Dichtung mit Schwebstoffen bzw. Stäuben im Vergleich zu der auf der Lagerinnenseite sehr gering, da diese problemlos nach außen abfallen können. D. h., dass die Lageraußenseite weniger anfällig für Verschmutzungen ist.
Falls dennoch Schwebstoffe bzw. Stäube versuchen sollten, in das Lager einzudringen bzw. Schmierstoffe versuchen sollten, aus diesem nach außen zu gelangen, werden diese dann von dem zweiten Dichtelement aufgehalten. Das zweite Dichtelement weist wenigstens eine Dichtlippe auf. Bevorzugt sind wenigsten zwei Dichtlippen umfasst, noch mehr bevorzugt drei Dichtlippen.

Beide Dichtelemente sind berührungsfreie Labyrinthdichtungen, welche mit nach außen gerichteten Dichtlippen ausgeführt sind. Diese sind derart konstruiert, dass nur ein sehr kleiner Spalt zwischen der Dichtung und dem inneren Lagerraum verbleibt, so dass diese nicht schleift und folglich auch nicht durch Reibung abgenutzt werden kann. Die sich zwischen den Dichtlippen befindenden Bereiche können zudem einen Aufnahmebereich für ein Sperrmittel ausbilden. Der Aufnahmebereich kann alternativ eine Schmiermittel-Reserve für das Lager enthalten.
Mittels der Dichtlippen und der mit Sperrmittel befüllten Aufnahmeräume wird eine zuverlässige Abdichtung des Ausrücklagers erreicht, so dass sich die Ausfallzeit für Reparatur- und/oder Wartungsarbeiten drastisch reduziert. Folglich sinken damit auch die Kosten, da weniger Ausfälle auftreten bzw. weniger Reparatur- und/oder Wartungsarbeiten notwendig sind.

Alternativ können die Dichtelemente auch berührend ausgestaltet sein. Bevorzugt weisen die Dichtlippen dann eine erhöhte Abriebfestigkeit auf, um abriebbedingte Abnutzungen zu vermeiden. Bei der Berührungsdichtung liegen die Dichtkanten der Dichtlippen im Schleifkontakt am inneren Lagerring an und dichten somit das Ausrücklager gegen äußere Einflüsse ab. Vorteilhafterweise hindert das Dichtungskonzept mit mehreren berührenden Dichtlippen einen großen Teil der Feinstaubpartikel daran, in den Aufnahmebereich für das Sperrmittel zu gelangen.

In einer bevorzugten Ausgestaltung weist das erste Dichtelement, welches ein inneres ringförmiges Dichtelement ist, eine Versteifung mit einer metallischen Kernscheibe, beispielsweise aus Stahl, wie rostfreien Edelstahl, und eine verdickte Wurzel auf, welche bevorzugt drei Dichtlippen umfasst. Die drei Dichtlippen weisen dabei eine bestimmte Lippengeometrie, insbesondere eine X-Form, auf. Im Vergleich zu den verschieden aus dem Stand der Technik bekannten Lösungen wird mittels der verdickten Wurzel eine stabile Form des Dichtelements erreicht. Vorteilhafterweise wird dadurch bei der Montage des ersten Dichtelements sichergestellt, dass es zu keiner Bewegung, wie einer Verschwenkbewegung, im Bereich der verdickten Wurzel kommt.

Weiterhin bevorzugt weisen die Dichtlippen unterschiedliche Größen auf. Die verdickte Wurzel umfasst daher eine erste Dichtlippe, eine zweite Dichtlippe und eine dritte Dichtlippe, wobei die dritte Dichtlippe im Durchmesser etwas größer als die erste und die zweite Dichtlippe ist. Dies bietet den Vorteil, dass die dritte, größere Dichtlippe mehr Steifigkeit aufweist. Durch die steife Gestaltung dieser dritten, größeren Dichtlippe und der Wurzel bildet sich zwischen der dritten Dichtlippe im Vergleich zu den kleineren Dichtlippen, insbesondere zu der zweiten Dichtlippe, ein definierter Radialspalt. D.h. zwischen der dritten Dichtlippe und der Dichtfläche, gegen welche die zweite Dichtlippe abdichtet, bildet sich ein Radialspalt. Der Radialspalt bleibt sowohl bei der Montage der dritten, größeren Dichtlippe, als auch durch den Abrieb der ersten und/oder zweiten Dichtlippe unbeeinflussbar gleich. Daraus folgt, dass der Radialspalt, im Vergleich zu aus dem Stand der Technik bekannten Systemen, unabhängig von dem Abrieb der ersten und/oder zweite Dichtlippe ist. Der Radialspalt hat dabei die Funktion einer Labyrinthdichtung.

Die erste und die zweite Dichtlippe sind im Durchmesser etwas kleiner als die dritte, größere Dichtlippe und wirken mit einer gewissen Spannkraft radial gegen wenigstens eine Dichtfläche des inneren Lagerrings. Dabei steht die erste Dichtlippe einer Dichtfläche am inneren Lagerring radial gegenüber, wohingegen die zweite Dichtlippe in ihrer radialen Richtung ständig mit der Schleuderscheibe in Kontakt steht und eine Berührungsdichtung an bzw. mit einer anderen Dichtfläche, als die der ersten Dichtlippe, ausbildet.

Im Rahmen der Erfindung ist es weiterhin bevorzugt, dass die Vorspannkraft zwischen der zweiten Dichtlippe und der entsprechenden Dichtfläche durch eine Verjüngung der Lippenwandstärke realisierbar ist. Zudem können die erste und die zweite Dichtlippe auch berührungslos mit einem Radialspalt versehen sein, so dass sie die Funktion einer Labyrinthdichtung erfüllen.

In einer weiteren bevorzugten Ausgestaltung der Erfindung ist das zweite Dichtelement aus einem Elastomer. Zudem ist das zweite Dichtelement mit einer metallischen Kernscheibe, beispielsweise aus Stahl, wie rostfreien Edelstahl, versteift. Bei der Herstellung wird die Kernscheibe dabei mit dem Elastomer von außen angespritzt.

Das zweite Dichtelement ist dabei bevorzugt zwischen dem inneren Lagerring und dem äußeren Lagerring angeordnet, sowie am äußeren Lagerring verankert. Zudem weist das zweite Dichtelement eine verdickte Wurzel auf, welche bevorzugt zwei Dichtlippen umfasst. Die zwei Dichtlippen weisen dabei eine bestimmte Lippengeometrie, insbesondere eine V-Form, auf. Im Vergleich zu den verschieden aus dem Stand der Technik bekannten Lösungen wird mittels der verdickten Wurzel eine stabile Form des Dichtelements erreicht. Vorteilhafterweise wird dadurch bei der Montage des zweiten Dichtelements sichergestellt, dass es zu keiner Bewegung, wie einer Verschwenkbewegung, im Bereich der verdickten Wurzel kommt.

Weiterhin bevorzugt weisen die zwei Dichtlippen unterschiedliche Größen auf. Die verdickte Wurzel umfasst daher eine erste Dichtlippe und eine zweite Dichtlippe, wobei die zweite Dichtlippe im Durchmesser etwas größer als die erste Dichtlippe ist. Dies bietet den Vorteil, dass die zweite, größere Dichtlippe mehr Steifigkeit aufweist. Durch die steife Gestaltung dieser zweiten, größeren Dichtlippe und der Wurzel lässt sich im Vergleich zu der ersten, kleineren Dichtlippe ein definierter Radialspalt bilden. D.h. zwischen der zweiten, größeren Dichtlippe und der Dichtfläche, gegen welche die erste Dichtlippe abdichtet, bildet sich ein Radialspalt. Der Radialspalt bleibt sowohl bei der Montage der zweiten, größeren Dichtlippe, als auch durch den Abrieb der ersten, kleineren Dichtlippe unbeeinflussbar gleichbleibend ist. Daraus folgt, dass der Radialspalt, im Vergleich zu aus dem Stand der Technik bekannten Systemen, unabhängig von dem Abrieb der ersten, kleineren Dichtlippe ist. Der Radialspalt hat dabei die Funktion einer Labyrinthdichtung und/oder einer Spaltdichtung.

Die erste, kleinere Dichtlippe wirkt mit einer gewissen Spannkraft radial gegen eine Dichtfläche des inneren Lagerrings. D.h., die erste, kleinere Dichtlippe steht in ihrer radialen Richtung ständig mit dem inneren Lagerring in Kontakt und bildet eine Berührungsdichtung an bzw. mit der Dichtfläche aus. Dabei steht diese erste, kleinere Dichtlippe der Dichtfläche im inneren Lagerring radial gegenüber.

Zudem bevorzugt ist die Dichtfläche ein geschliffener Lagerring-Innenbord, welcher eine hohe Messgenauigkeit aufweist und der mit großer Oberflächengüte herstellbar ist. Daraus folgt, dass an bzw. mit der Dichtfläche eine besonders zuverlässige Abdichtung erreicht wird. Die Notwendigkeit einer derartigen besonders zuverlässigen Abdichtung zeigt sich beispielsweise bei der Verwendung der Dichtung bei Fahrzeugen, wie Baustellen- oder landwirtschaftlichen Fahrzeugen, die aufgrund ihres Einsatzgebietes einer hohen Feuchtigkeits- und/oder Staubbelastung ausgesetzt sind.

Im Rahmen der Erfindung ist es daher weiterhin bevorzugt, dass die Vorspannkraft zwischen der ersten, kleineren Dichtlippe und der Dichtfläche durch eine definierte Lippenwandstärke, einen Hebelarm und/oder einen definierten Winkel realisierbar ist. Dies ist besonders vorteilhaft, da die Vorspannkraft der Dichtung nun nicht mehr allein durch eine Verschwenkbewegung an der Wurzel erzeugt wird.

Des Weiteren ist es bevorzugt, dass sich zwischen der ersten und der zweiten Dichtlippe, insbesondere auf dem rotierenden inneren Lagerring, eine ringförmige Nut als Aufnahmebereich für ein Sperrmittel ausbildet. Es ist dabei als erfindungswesentlich erkannt worden, dass diese Nut als Aufnahmebereich für ein Sperrmittel dient. Dies ist besonders vorteilhaft, da der Platz zwischen den beiden Dichtlippen aufgrund des Winkels und der kurzen Lippendichtung nicht für ein funktionsfähiges Sperrmittel ausreicht. Durch eine Erweiterung des Raumes zwischen den beiden Dichtlippen mit einer Nut, wird dieses Problem zuverlässig gelöst. Im Rahmen der Erfindung kann die Nut hierbei verschiedene Formen annehmen.

Aufgrund der vorgeschlagenen Ausbildung des zweiten Dichtelements wird vorteilhafterweise erreicht, dass die erste, berührende Dichtlippe bereits einen großen Anteil an Staubpartikeln blockiert. Die penetrierenden, feinstaubigen Partikel werden dabei durch den gebildeten Aufnahmebereich für das Sperrmittel abgefangen, indem das Sperrmittel in der Nut durch die von dem rotierenden inneren Lagerring erzeugte Fliehkraft eine Abschirmung aufbaut. Durch diese Abschirmung werden die Feinstaubpartikeln abgefangen, welche durch die Dichtung durchgegangen sind. Der Radialspalt zwischen der zweiten, größeren Dichtlippe und der Dichtfläche hat dabei die Funktion einer Labyrinthdichtung und/oder einer Spaltdichtung, so dass die restlichen penetrierenden feinstaubigen Partikel beim Eindringen in den Fettraum zuverlässig gehindert werden.

Dieses Dichtungskonzept kann sowohl bei gezogenen, als auch bei gedrückten Ausrücklagern eingesetzt werden. Zudem ist es möglich, dass dieses Konzept für die Abdichtung aller Lagerseiten, wie beispielsweise der Motorseite und/oder der Getriebeseite verwendet wird. Bei einem gedrückten Ausrücklager wird, aufgrund der Montage des inneren Lagerrings, die erste, berührende Dichtlippe gedreht. Bevorzugt erfolgt diese Drehung um 180°, so dass die erste, berührende Dichtlippe nach innen, d.h. in Richtung des Fettraumes, zeigt. Die zweite, größere Dichtlippe zeigt nach außen, d.h. in Richtung der Umgebung des Ausrücklagers, und weist einen Spalt zu der Dichtfläche auf.

Der Begriff "Sperrmittel" betrifft ein Schmiermittel oder eine Zusammensetzung, wie ein Fett, eine Paste und/oder ein anderes geeignetes Schmiermittel, welches den Eintritt von Schmutz in das Ausrücklager blockiert und so äußere Fremdpartikel und Wasser primär von der Dichtungsanordnung und sekundär von dem Lagerinneren fernhält. Bevorzugt ist das Sperrmittel ein Schmiermittel, ein Fett und/oder eine Paste. Noch mehr bevorzugt ist das Sperrmittel temperaturbeständig.

Bevorzugt ist das Sperrmittel in einem Aufnahmebereich vorhanden und bildet ein Depot, welches bei Vorhandensein einer Dichtungsanordnung als eine zwischengelagerte Dichtung wirkt. Infolge wird die fremdartige Belastung an der Dichtungsanordnung und damit der dort auftretende Verschleiß reduziert, wodurch die Lebensdauer des Wälzlagers beachtlich gesteigert wird. Mittels des Sperrmittels wird somit erreicht, dass in der Umgebung des Ausrücklagers auftretende Fremdpartikel nicht so leicht in das Lagerinnere vordringen. Verständlicherweise bedeutet dies nicht, dass lediglich das Eindringen von Fremdpartikeln, wie Schmutz, Schwebstoffen und Stäuben verhindert wird, sondern natürlich auch das Eindringen von Feuchtigkeit und das Ausdringen von Schmierstoffen aus dem Lagerinneren.

Es wird davon ausgegangen, dass die Definitionen und Ausführungen der oben genannten Begriffe für alle in dieser Beschreibung im Folgenden beschriebenen Aspekte gelten, sofern nichts anders angegeben ist.

Weitere Einzelheiten, Merkmale und Vorteile der Erfindung ergeben sich aus der nachfolgenden Beschreibung des bevorzugten Ausführungsbeispiels in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktion einander entsprechende Elemente.

Im Einzelnen zeigt:
- Figur 1: eine Teilschnittdarstellung einer gezogenen Ausrückvorrichtung mit zwei Ausrücklagern;
- Figur 2: eine vergrößerte Darstellung der Dichtungsanordnung des gezogenen Ausrücklagers aus Figur 1;
- Figur 3: eine vergrößerte Teilschnittdarstellung des gezogenen Ausrücklagers aus Figur 1;
- Figur 4: in isometrischer Darstellung eine Schiebehülse für das gezogene Ausrücklager;
- Figur 5: eine Schiebehülse mit einem Halteblech in isometrischer Darstellung für das gezogene Ausrücklager;
- Figur 6: eine Teilschnittdarstellung einer gedrückten Ausrückvorrichtung mit zwei Ausrücklagern;
- Figur 7: eine vergrößerte Darstellung des gedrückten Ausrücklagers aus Figur 6;
- Figur 8: in isometrischer Darstellung eine Schiebehülse für das gedrückte Ausrücklager;
- Figur 9: eine detaillierte Darstellung des ersten und zweiten Dichtelements;
- Figur 10: eine vergrößerte Darstellung des ersten Dichtungselements; und
- Figur 11: eine vergrößerte Darstellung des zweiten Dichtungselements.

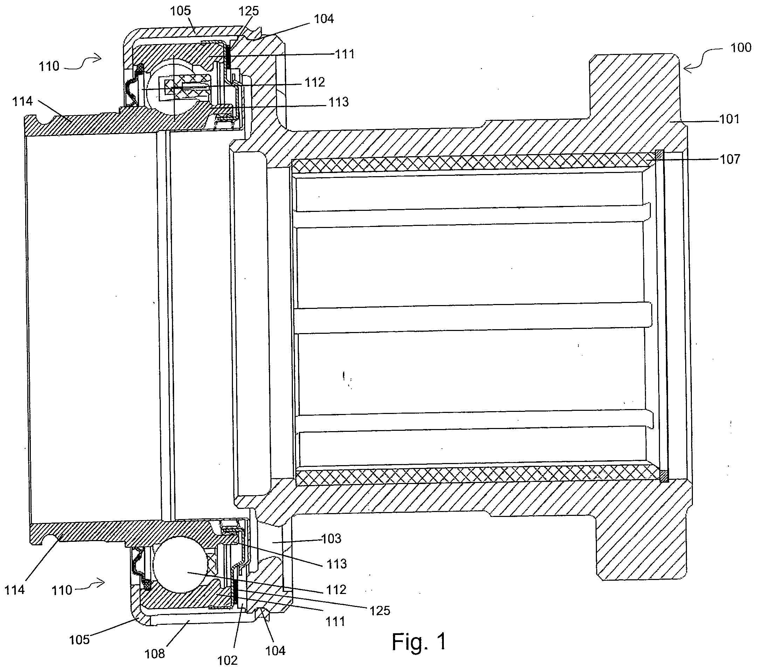

Die Figur 1 zeigt eine Teilschnittdarstellung einer gezogenen Ausrückvorrichtung (100) mit zwei Ausrücklagern (110) zur Betätigung einer nicht dargestellten Reibungskupplung eines Kraftfahrzeuges. Die Ausrückvorrichtung (110) umfasst zunächst ein Führungsrohr (107) und eine Schiebehülse (101), welcher auf dem Führungsrohr (107) axial verschiebbar ist und wenigstens eine radiale und axiale Öffnung am äußeren Rand aufweist (102, 103). Die Ausrückvorrichtung (100) umfasst zudem einen Halteabschnitt (104), an welchem ein Halteblech (105) befestigt ist, welches ein selbstjustierendes Ausrücklager (110) an einen Flansch der Schiebehülse (101) drückt und eine radiale Öffnung (108) am äußeren Rand aufweist. Des Weiteren umfasst ist ein an dem Halteblech (105) angeordnetes selbstjustierendes Ausrücklager (110).

Das Ausrücklager (110) umfasst einen drehfest zu der Schiebehülse (101) angeordneten äußeren Lagerring (111), zwischen dem äußeren und einem inneren Lagerring (111, 113) angeordnete Wälzkörper (112) und einen umlaufenden inneren Lagerring (113). Zwischen dem äußeren Lagerring (111) des Ausrücklagers (110) und dem Schiebehülsen-Flansch (101) befindet sich ein Federelement (125). Der innere Lagerring (113) ist mittels eines Axialfortsatzes (114) über das Ausrücklager (110) hinaus verlängert und steht mit einem Betätigungselement der Reibungskupplung in Wirkverbindung.

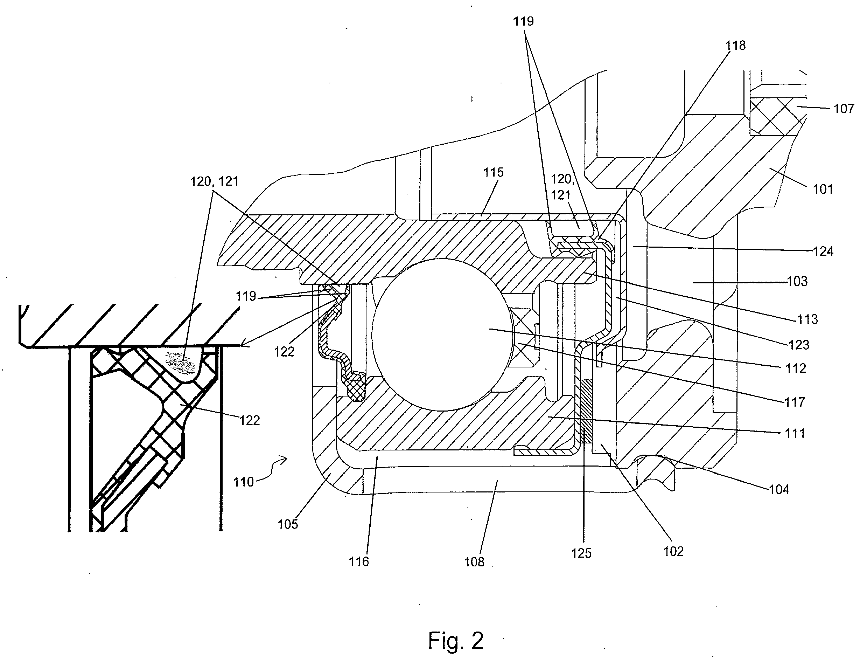

Die in Figur 2 vergrößerte Darstellung der Dichtungsanordnung des gezogenen Ausrücklagers (110) weist einen drehfest zu der Schiebehülse (101) angeordneten äußeren Lagerring (111), zwischen dem äußeren und einem inneren Lagerring (111, 113) angeordnete Wälzkörper (112) und einen umlaufenden inneren Lagerring (113) auf. Das Halteblech (105) ist an der Außenumfangsfläche des Haltebereichs (104) verrollt und erstreckt sich unter Einfluss eines radialen Justierspaltes (116) axial über das Ausrücklager (110). Das Halteblech (105) greift an der von dem Haltebereich (104) abgewandten Stirnseite des radial äußeren, drehfesten Lagerrings (111) an das Ausrücklager (110) an. Dabei befindet sich zwischen einem Flansch der Schiebehülse (101) und dem äußeren Lagerring (111) des Ausrücklagers (110) ein Federelement (125).

Die Schiebehülse (101) ist auf dem Führungsrohr (107) axial verschiebbar und weist eine radiale und axiale Öffnung auf (102, 103). Deutlich zu erkennen ist, dass sich die axiale Öffnung (103) nach außen verjüngt.

Der äußere und innere Lagerring (111, 113) weisen zueinander zugewandte Laufbahnen für in einem Kugelkäfig (117) geführte Kugeln, d.h. den Wälzkörpern (112), auf. Um diese vor dem Eindringen von Verschmutzungen und Feuchtigkeit, sowie dem Austritt von Schmiermittel aus dem Lagerinnenraum schützen, sind ein erstes und ein zweites Dichtelement (118, 122) angeordnet. Diese sind bevorzugt als berührungsfreie Labyrinthdichtungen ausgestaltet, welche Dichtlippen (119) und einen zwischen den Dichtlippen (119) angeordneten Aufnahmeraum (120) umfassen, welcher mit einem Sperrmittel (121) befüllt ist. Beide Dichtelemente (118, 122) sind mit dem äußeren Lagerring (111) verbunden und somit drehfest.

Das erste Dichtelement (118) bildet zusammen mit dem inneren Lagerring (113) auf der einen Seite und der Schleuderscheibe (115) auf der anderen Seite eine Dichtstruktur aus. Mittels der Schleuderscheibe (115) wird eine Zentrifugalkraftströmung erzeugt, so dass in das Lager fallender Schmutz mittels der Zentrifugalkraft und der Kraft des eigenen Gewichtes aus der axialen Öffnung (103) bzw. den radialen Öffnungen (102, 108) der Schiebehülse (101) und des Halteblechs (105) ausgetrieben werden. Die Schleuderscheibe (115) ist derart ausgebildet, dass diese mit dem Flansch der Schiebehülse (101) einen umlaufenden Spalt (124) bildet. Der Schmutz, die Wärme und/oder die Feuchtigkeit werden dabei in dem umlaufenden Spalt (124) über die Öffnungen abtransportiert.

Trotz der ständigen Austragswirkung der Schleuderscheibe (115) kann es dennoch passieren, dass geringfügig Schmutz und oder Feuchtigkeit versucht, über den Kapillarspalt (123) in das Lagerinnere vorzudringen. Dabei muss es allerdings die nach außen gerichteten Dichtlippen (119) und die mit dem Sperrmittel (121) befüllten Aufnahmeräume (120) zwischen den Dichtlippen (119) überwinden. Das erste Dichtelement (118) bzw. die damit ausgebildete Dichtstruktur dichtet somit den Wälzkörperraum zur der Innenseite des Ausrücklagers ab.

Das zweite Dichtelement (122) weist nach außen gerichtete Dichtlippen (119) und einen mit Sperrmittel (121) befüllten Aufnahmeraum (120) zwischen den Dichtlippen (119) auf. Das zweite Dichtelement (122) ist ebenfalls als berührungsfreie Labyrinthdichtung ausgestaltet und dichtet den Wälzkörperraum zur Außenseite des Ausrücklagers ab. Dieser ist vor Verschmutzungen bereits dadurch geschützt, dass Schmutz einfach nach außen abfallen kann.

Es ist in Figur 2 deutlich zu erkennen, dass zwischen den Dichtlippen (119) ein Aufnahmeraum (120) für ein Sperrmittel (121) ausgebildet ist. Alternativ kann anstelle eines Sperrmittels (121) auch ein anderweitig geeignetes temperaturbeständiges Fett oder eine entsprechende Paste eingefüllt werden, um dem Lagerinnenraum gegenüber dem Eintritt von Fremdpartikeln zu schützen.

Der umlaufende Spalt (124) ist der ausgebildet, dass Verschmutzungen und Feuchtigkeit, sowie Wärme leicht über die in der Schiebehülse (101) bzw. dem Halteblech (105) ausgesparten radialen bzw. axialen Öffnungen (102, 103, 108) abgeführt werden können. Hingegen ist der Kapillarspalt (123) derart bemessen, dass der umlaufende innere Lagerring (113) den feststehenden äußeren Lagerring (111) gerade nicht berührt. Dieser Kapillarspalt (123) erweitert sich in axialer Richtung zu dem ersten Dichtelement (118).
Wenn sich das Ausrücklager (110) im Einbauzustand in einem Kraftfahrzeug bei einem Justagevorgang in der zur Zeichnungsebene senkrechten Ebene selbst justiert, so wird der zwischen dem inneren und dem äußeren Lagerring (111, 113) angeordnete Kapillarspalt nicht beeinflusst.

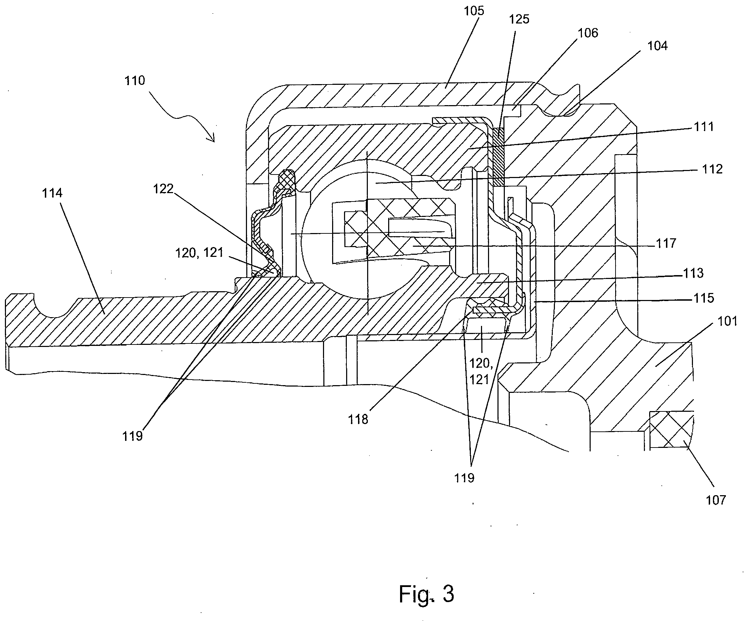

Die in Figur 3 vergrößert Teilschnittdarstellung des gezogenen Ausrücklagers (110) weist einen drehfest zu der Schiebehülse (101) angeordneten äußeren Lagerring (111), zwischen dem äußeren und einem inneren Lagerring (111, 113) angeordnete Wälzkörper (112) und einen umlaufenden inneren Lagerring (113) mit einem Axialfortsatz (114) auf. Das Halteblech (105) ist an der Außenumfangsfläche des Haltebereichs (104) verrollt und erstreckt sich axial über das Ausrücklager (110). Das Halteblech (105) greift an der von dem Haltebereich (104) abgewandten Stirnseite des radial äußeren, drehfesten Lagerrings (111) an das Ausrücklager (110) an. Dabei befindet sich zwischen einem Flansch der Schiebehülse (101) und dem äußeren Lagerring (111) des Ausrücklagers (110) ein Federelement (125).

Deutlich zu erkennen ist, dass die auf dem Führungsrohr (107) axial verschiebbare Schiebehülse (101) eine eingebrachte Nut (106) ausbildet. Diese Nut (106) erleichtert die Montage des Halteblechs (105) und stellt sicher, dass in das Lager einfallender Schmutz gleich wieder aus der radialen Öffnung des Halteblechs (105, 108) abtransportiert wird.

Der äußere und innere Lagerring (111, 113) weisen zueinander zugewandte Laufbahnen für in einem Kugelkäfig (117) geführte Wälzkörper (112) auf. Um diese vor dem Eindringen von Verschmutzungen und Feuchtigkeit, sowie dem Austritt von Schmiermittel aus dem Lagerinnenraum schützen, sind ein erstes und ein zweites Dichtelement (118, 122) angeordnet. Diese sind bevorzugt als berührungsfreie Labyrinthdichtungen ausgestaltet, welche nach außen gerichtete Dichtlippen (119) und einen zwischen den Dichtlippen (119) mit einem Sperrmittel (121) befüllten Aufnahmeraum (120) umfassen. Die Dichtelemente (118, 122) sind mit dem äußeren Lagerring (111) verbunden.

Das erste Dichtelement (118) bildet zusammen mit dem inneren Lagerring (113) auf der einen Seite und der Schleuderscheibe (115) auf der anderen Seite eine Dichtstruktur aus. Mittels der Schleuderscheibe (115) wird eine Zentrifugalkraftströmung erzeugt, so dass in das Lager fallender Schmutz mittels der Zentrifugalkraft und der Kraft des eigenen Gewichtes aus dem Ausrücklager (110) ausgetrieben wird. Die von der Schleuderscheibe (115) erzeugte Zentrifugalkraft reißt dabei nicht nur Schmutz mit, sondern auch Wärme und/oder Feuchtigkeit.

Das zweite Dichtelement (122) dichtet den Wälzkörperraum zur Außenseite des Ausrücklagers ab, welcher bereits dadurch vor Verschmutzungen geschützt ist, dass dieser einfach nach außen abfallen kann.

Natürlich kann anstelle des Sperrmittels (121) auch ein anderweitig geeignetes temperaturbeständiges Fett oder eine entsprechende Paste eingefüllt werden, um dem Lagerinnenraum gegenüber dem Eintritt von Fremdpartikeln zu schützen.

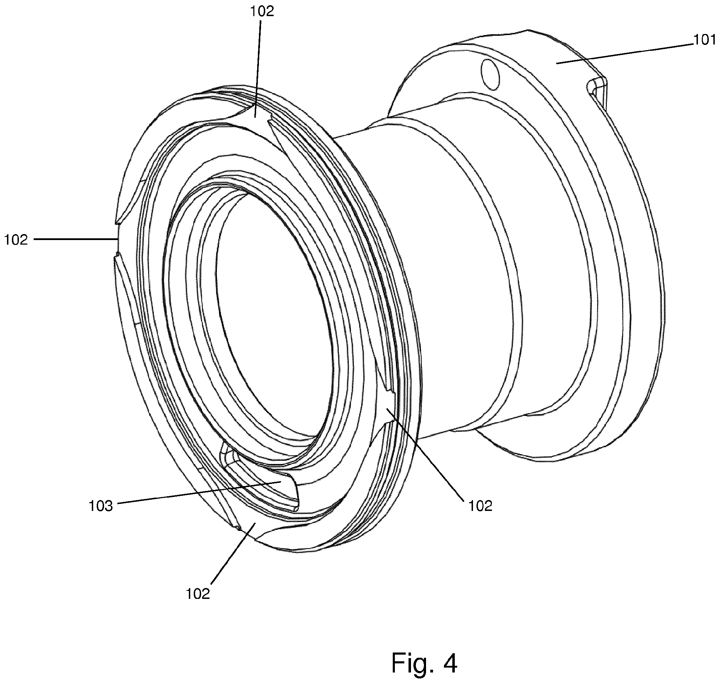

In Figur 4 ist eine isometrische Darstellung der Schiebehülse (101) des gezogenen Ausrücklagers aus Figur 1 gezeigt. Deutlich zu erkennen ist, dass die Schiebehülse (101) neben der zentrischen Öffnung vier radiale Öffnungen (102) und eine axiale Öffnung (103) aufweist, welche zum Abtransport von Schmutz, Feuchtigkeit bzw. zur Wärmeabfuhr dienen. Es ist dabei deutlich zu erkennen, dass sich die radialen Öffnungen (102) der Schiebehülse (101) nach außen verjüngen.

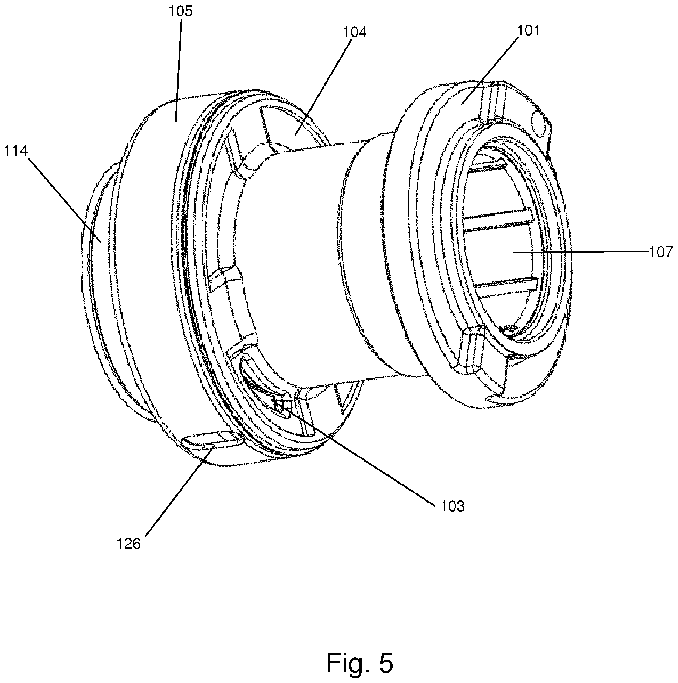

In Figur 5 ist eine Schiebehülse mit einem Halteblech in isometrischer Darstellung für ein gezogenes Ausrücklager gezeigt. Die auf dem Führungsrohr (107) axial verschiebbare Schiebehülse (101) weist eine axiale Öffnung (103) auf.

Das Halteblech (105) ist an der Außenumfangsfläche des Haltebereichs (104) verrollt und erstreckt sich axial über das nicht dargestellte Ausrücklager. Das Halteblech (105) weist eine radiale Öffnung (108) auf.

Des Weiteren ist der Axialfortsatz (114) des inneren Lagerrings des nicht dargestellten Ausrücklagers gezeigt, welcher den inneren Lagerring über das Lager hinaus verlängert und mit einem Betätigungselement der Reibungskupplung in Wirkverbindung steht.

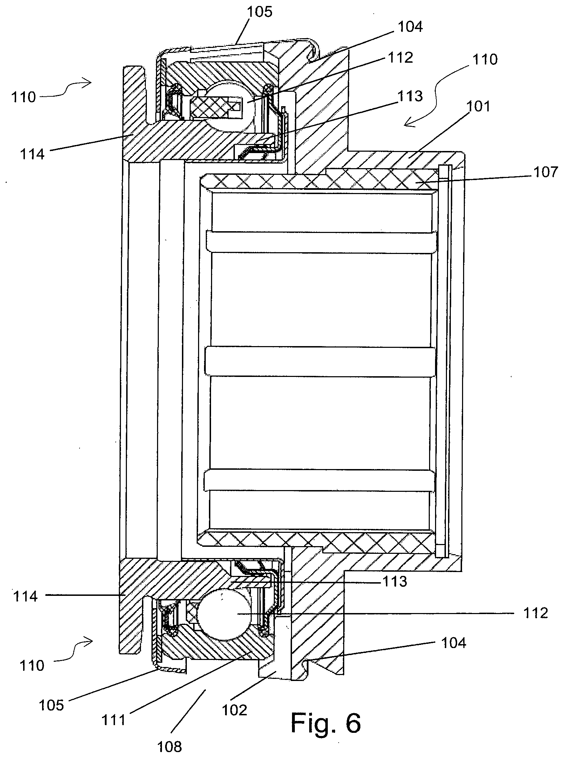

In Figur 6 ist eine Teilschnittdarstellung einer gedrückten Ausrückvorrichtung (100) mit zwei Ausrücklagern gezeigt. Die dargestellte Ausrückvorrichtung ist im Wesentlichen identisch zu der gezogenen Ausrückvorrichtung (100) aufgebaut, wie in der Figur 1 dargestellt.

Die Ausrückvorrichtung (100) umfasst eine auf einem Führungsrohr (107) verschiebbare Schiebehülse (101) mit einer radialen Aussparung (102). Die Ausrückvorrichtung (100) umfasst zudem einen Halteabschnitt (104), an welchem ein Halteblech (105) befestigt ist, welches ein selbstjustierendes Ausrücklager (110) an einen Flansch der Schiebehülse (101) drückt und eine radiale Öffnung (108) am äußeren Rand aufweist. Des Weiteren umfasst ist ein an dem Halteblech (105) angeordnetes selbstjustierendes Ausrücklager (110).

Das Ausrücklager (110) umfasst einen drehfest zu der Schiebehülse (101) angeordneten äußeren Lagerring (111), zwischen dem äußeren und einem inneren Lagerring (111, 113) angeordnete Wälzkörper (112) und einen umlaufenden inneren Lagerring (113). Der innere Lagerring (113) ist mittels eines Axialfortsatzes (114) über das Ausrücklager (110) hinaus verlängert und steht mit einem Betätigungselement der Reibungskupplung in Wirkverbindung.

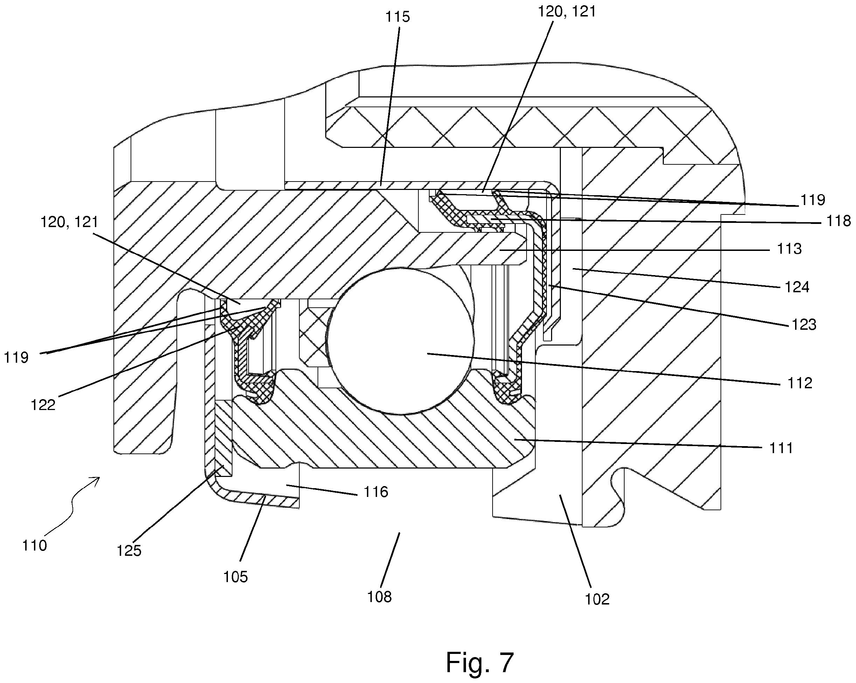

Die in Figur 7 vergrößerte Darstellung des gedrückten Ausrücklagers (110) aus Figur 6 weist einen drehfest angeordneten äußeren Lagerring (111), zwischen dem äußeren und einem inneren Lagerring (111, 113) angeordnete Wälzkörper (112) und einen umlaufenden inneren Lagerring (113) auf. Das Halteblech (105) erstreckt sich unter Einfluss eines radialen Justierspaltes (116) axial über das Ausrücklager (110) und weist eine radiale Öffnung (108) auf. Eine weitere radiale Öffnung (102) weist eine nicht dargestellte Schiebehülse auf. Zwischen einem Flansch der nicht dargestellten Schiebehülse und dem äußeren Lagerring (111) des Ausrücklagers (110) befindet sich ein Federelement (125).

Um das Ausrücklager (110) vor dem Eindringen von Verschmutzungen und Feuchtigkeit, sowie dem Austritt von Schmiermittel aus dem Lagerinnenraum schützen, sind ein erstes und ein zweites Dichtelement (118, 122) angeordnet. Beide Dichtelemente (118, 122) sind bevorzugt als berührungsfreie Labyrinthdichtungen ausgestaltet und weisen nach außen gerichtete Dichtlippen (119) und einen zwischen den Dichtlippen (119) angeordneten Aufnahmeraum (120) auf, welcher mit einem Sperrmittel (121) befüllt ist. Anstelle des Sperrmittels (121) kann auch ein anderweitig geeignetes temperaturbeständiges Fett oder eine entsprechende Paste verwendet werden, um dem Lagerinnenraum gegenüber dem Eintritt von Fremdpartikeln zu schützen. Beide Dichtelemente (118, 122) sind mit dem äußeren Lagerring (111) verbunden und somit drehfest.

Das erste Dichtelement (118) bildet zusammen mit dem inneren Lagerring (113) auf der einen Seite und der Schleuderscheibe (115) auf der anderen Seite eine Dichtstruktur aus. Mittels der Schleuderscheibe (115) wird eine Zentrifugalkraftströmung erzeugt, so dass in das Lager fallender Schmutz mittels der Zentrifugalkraft und der Kraft des eigenen Gewichtes aus den radialen Öffnungen (102, 108) ausgetrieben werden. Die Schleuderscheibe (115) ist derart ausgebildet, dass diese mit dem Flansch der Schiebehülse (101) einen umlaufenden Spalt (124) bildet. Der Schmutz, die Wärme und/oder die Feuchtigkeit werden dabei in dem umlaufenden Spalt (124) über die Öffnungen abtransportiert.

Trotz der ständigen Austragswirkung der Schleuderscheibe (115) kann es dennoch passieren, dass geringfügig Schmutz und oder Feuchtigkeit versucht, über den Kapillarspalt (123) in das Lagerinnere vorzudringen. Dabei muss dieser das erste Dichtelement (118) überwinden, welches den Wälzkörperraum zu der Innenseite des Ausrücklagers abdichtet.

Der umlaufende Spalt (124) ist derart ausgebildet, dass Verschmutzungen und Feuchtigkeit, sowie Wärme leicht über die in der Schiebehülse bzw. dem Halteblech (105) ausgesparten radialen Öffnungen (102, 108) abgeführt werden können. Hingegen ist der Kapillarspalt (123) derart bemessen, dass der umlaufende innere Lagerring (113) den feststehenden äußeren Lagerring (111) gerade nicht berührt. Dieser Kapillarspalt (123) erweitert sich in axialer Richtung zu dem ersten Dichtelement (118).

Wenn sich das Ausrücklager (110) im Einbauzustand in einem Kraftfahrzeug bei einem Justagevorgang in der zur Zeichnungsebene senkrechten Ebene selbst justiert, so wird der zwischen dem inneren und dem äußeren Lagerring (111, 113) angeordnete Kapillarspalt nicht beeinflusst.

Das zweite Dichtelement (122) dichtet den Wälzkörperraum zur Außenseite des Ausrücklagers ab. Dieser ist vor Verschmutzungen bereits dadurch geschützt, dass Schmutz einfach nach außen abfallen kann.

Wie in der Figur 7 deutlich zu erkennen ist, umfasst auch das zweite Dichtungselement (122) zwei Dichtlippen (119). Die zwei Dichtlippen (119) weisen unterschiedliche Größen auf, wobei die zweite Dichtlippe im Durchmesser etwas größer als die erste, berührende Dichtlippe ist und daher mehr Steifigkeit aufweist. Durch die steife Gestaltung kann sich zwischen der zweiten Dichtlippe und der Dichtfläche, gegen welche die erste, berührende Dichtlippe abdichtet, ein Radialspalt ausbilden (nicht gezeigt). Bei dem gedrückten Ausrücklager würde die zweite, größere Dichtlippe dann nach außen, d.h. in Richtung der Umgebung des Ausrücklagers, zeigen. Zudem kann zwischen der ersten und der zweiten Dichtlippe (119) eine ringförmige Nut als Aufnahmebereich für ein Sperrmittel (121) vorgesehen sein (nicht gezeigt).

Aufgrund der Montage des inneren Lagerrings (113) kann es notwendig sein, dass die erste, berührende Dichtlippe um 180° gedreht werden muss, so dass diese nach innen, d.h. in Richtung des Fettraumes, zeigt (nicht dargestellt).

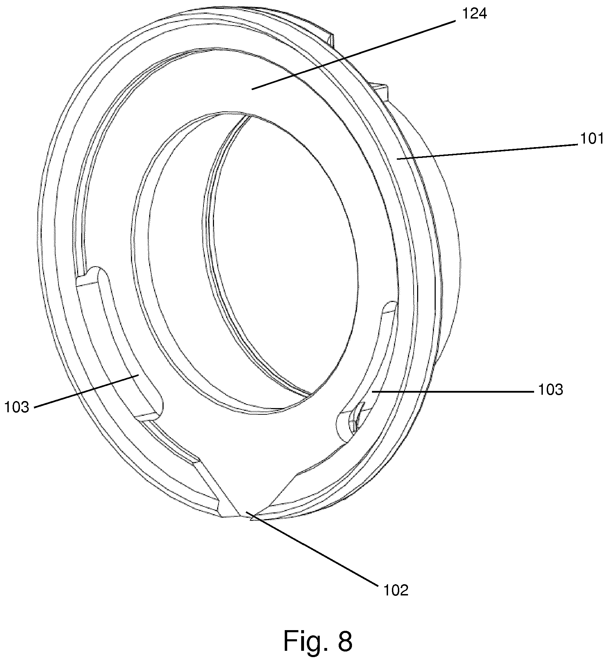

In Figur 8 ist eine isometrische Darstellung der Schiebehülse (101) des gedrückten Ausrücklagers aus Figur 6 gezeigt. Deutlich zu erkennen ist, dass die Schiebehülse (101) neben der zentrischen Öffnung nur eine radiale Öffnung (102) und zwei axiale Öffnungen (103) aufweist, welche über einen umlaufenden Spalt (124) zum Abtransport von Schmutz, Feuchtigkeit bzw. zur Wärmeabfuhr dienen. Es ist dabei deutlich zu erkennen, dass sich die radialen Öffnungen (102) der Schiebehülse (101) nach außen verjüngen.

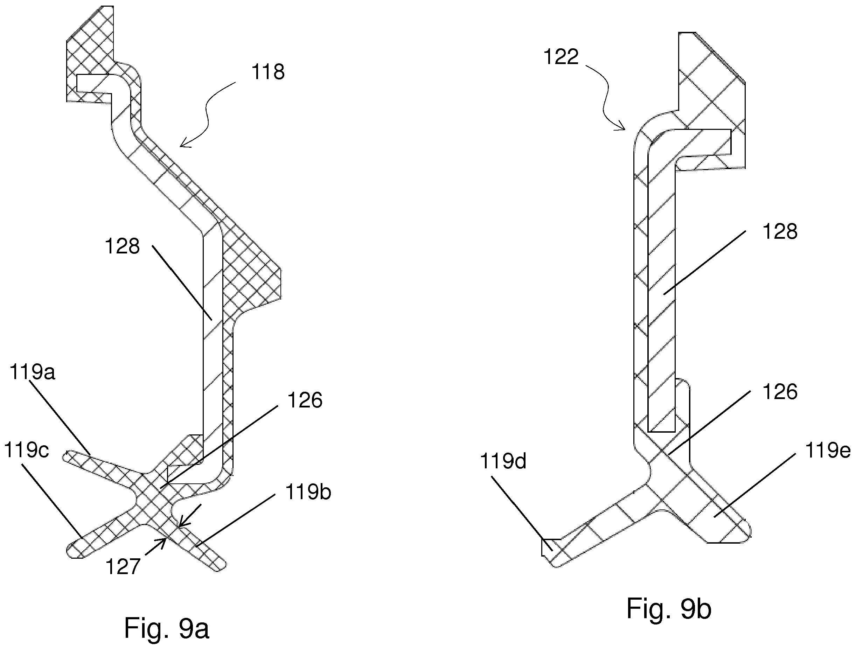

In Figuren 9a und 9b sind das erste und das zweite Dichtelement (118, 122) im Detail dargestellt.

Wie in Figur 9a gezeigt, weist das erste Dichtelement (118) eine Versteifung mit einer metallischen Kernscheibe (128), sowie eine verdickte Wurzel (126) auf, welche drei Dichtlippen (119a, 119b, 119c) umfasst. Die drei Dichtlippen weisen dabei eine X-Form, und unterschiedliche Größen auf. Die dritte Dichtlippe (119c) ist im Durchmesser etwas größer als die erste und die zweite Dichtlippe (119a, 119b). Die Vorspannkraft zwischen der zweiten Dichtlippe (119b) und der entsprechenden Dichtfläche (S3) ist durch eine Verjüngung der Lippenwandstärke (127) realisierbar, wie durch die Pfeile angedeutet ist.

Wie in Figur 9b gezeigt, weist das zweite Dichtelement (122) eine Versteifung mit einer metallischen Kernscheibe (128), sowie eine verdickte Wurzel (126) auf, welche zwei Dichtlippen (119d, 119e) umfasst. Die zwei Dichtlippen (119d, 119e) weisen dabei eine V-Form und unterschiedliche Größen auf. Die zweite Dichtlippe (119e) ist im Durchmesser etwas größer als die erste Dichtlippe (119d).

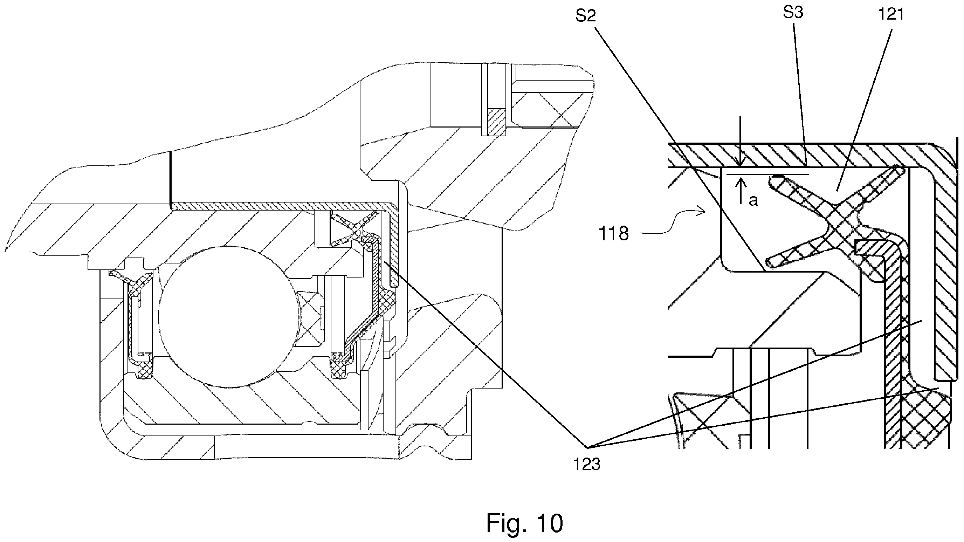

In Figur 10 ist eine vergrößerte Darstellung des ersten Dichtungselements (118) und des Kapillarspalts (123) gezeigt. Wie deutlich zu erkennen ist, weist das erste Dichtungselement (118) eine verdickte Wurzel auf, welche drei Dichtlippen mit unterschiedlichen Größen umfasst. Die dritte Dichtlippe ist im Durchmesser etwas größer als die erste und die zweite Dichtlippe und weist daher mehr Steifigkeit auf. Durch die steife Gestaltung dieser dritten, größeren Dichtlippe und der Wurzel bildet sich zwischen der dritten Dichtlippe und der Dichtfläche (S3), gegen welche die zweite Dichtlippe abdichtet, ein Radialspalt (a) aus. Der Radialspalt (a) bleibt sowohl bei der Montage der dritten, größeren Dichtlippe, als auch durch den Abrieb der ersten und/oder zweiten Dichtlippe unbeeinflussbar gleich und hat dabei die Funktion einer Labyrinthdichtung.

Die erste und die zweite Dichtlippe sind im Durchmesser etwas kleiner als die dritte, größere Dichtlippe und wirken mit einer gewissen Spannkraft radial gegen eine Dichtfläche des inneren Lagerrings. Dabei steht die erste Dichtlippe der Dichtfläche (S2) am inneren Lagerring radial gegenüber, wohingegen die zweite Dichtlippe in ihrer radialen Richtung ständig mit der Schleuderscheibe in Kontakt steht und eine Berührungsdichtung an bzw. mit der Dichtfläche (S3) ausbildet. Dabei können die erste und die zweite Dichtlippe auch berührungslos mit einem Radialspalt (a) versehen sein, so dass sie die Funktion einer Labyrinthdichtung erfüllen.

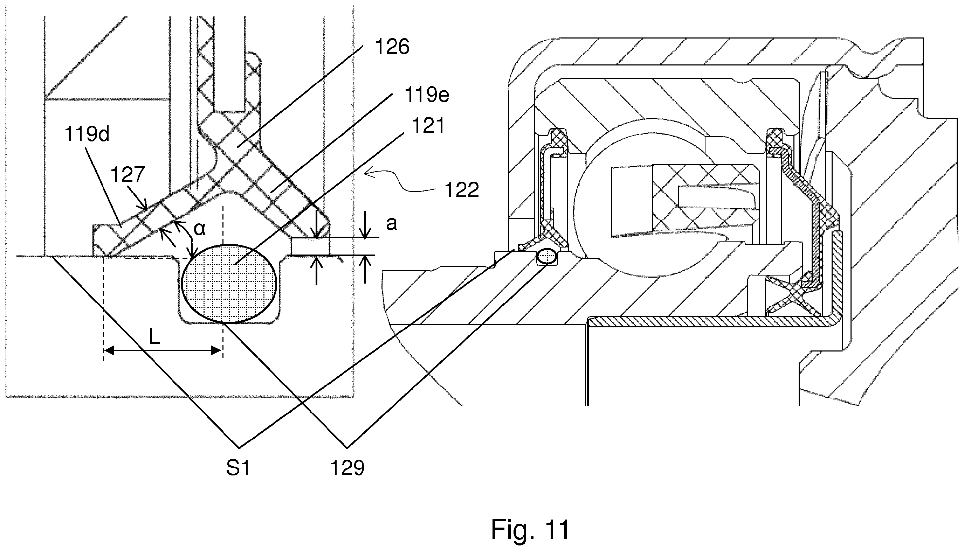

Figur 11 zeigt eine vergrößerte Darstellung des zweiten Dichtungselements (122). Wie deutlich zu erkennen ist, weist auch das zweite Dichtungselement (122) eine verdickte Wurzel (126) auf, welche bevorzugt zwei Dichtlippen (119d, 119e) umfasst. Die zwei Dichtlippen (119d, 119e) weisen unterschiedliche Größen auf, wobei die zweite Dichtlippe (119e) im Durchmesser etwas größer als die erste Dichtlippe (119d) ist und daher mehr Steifigkeit aufweist. Durch die steife Gestaltung bildet sich zwischen der zweiten Dichtlippe (119e) und der Dichtfläche (S1), gegen welche die erste Dichtlippe (119d) abdichtet, ein Radialspalt (a). Der Radialspalt (a) bleibt sowohl bei der Montage der zweiten Dichtlippe (119e), als auch durch den Abrieb der ersten Dichtlippe (119d) unbeeinflussbar gleich.

Die erste Dichtlippe (119d) wirkt mit einer gewissen Spannkraft radial gegen die Dichtfläche (S1) des inneren Lagerrings, so dass sie eine Berührungsdichtung an bzw. mit der Dichtfläche (S1) ausbildet. Die Vorspannkraft zwischen der ersten Dichtlippe (119d) und der Dichtfläche (S1) ist durch eine definierte Lippenwandstärke (127), einen Hebelarm (L) und einen definierten Winkel (α) realisiert, wie durch die Pfeile angedeutet.

Zwischen der ersten und der zweiten Dichtlippe (119d, 119e) ist eine ringförmige Nut (129) als Aufnahmebereich für ein Sperrmittel (121) ausbildet. Diese Nut (129) ist besonders wichtig, da der Platz zwischen den beiden Dichtlippen (119d, 119e) aufgrund des Winkels (α) und der kurzen Lippendichtung nicht für ein funktionsfähiges Sperrmittel ausreicht.

### Bezugszeichenliste

- 100: Ausrückvorrichtung
- 101: Schiebehülse
- 102: radiale Öffnung der Schiebehülse
- 103: axiale Öffnung der Schiebehülse
- 104: Halteabschnitt
- 105: Halteblech
- 106: Nut
- 107: Führungsrohr
- 108: radiale Öffnung des Halteblechs

- 110: selbstjustierendes Ausrücklager
- 111: äußerer Lagerring
- 112: Wälzkörper
- 113: innerer Lagerring
- 114: Axialfortsatz
- 115: Schleuderscheibe
- 116: Justierspalt
- 117: Kügelkäfig
- 118: erstes Dichtelement
- 119: Dichtlippe
- 119a: erste Dichtlippe des ersten Dichtelements
- 119b: zweite Dichtlippe des ersten Dichtelements
- 119c: dritte Dichtlippe des ersten Dichtelements
- 119d: erste Dichtlippe des zweiten Dichtelements
- 119e: zweite Dichtlippe des zweiten Dichtelements
- 120: Aufnahmebereich
- 121: Sperrmittel
- 122: zweites Dichtelement

- 123: Kapillarspalt
- 124: umlaufender Spalt
- 125: Federelement
- 126: Wurzel des ersten und zweiten Dichtelements
- 127: Lippenwandstärke
- 128: Versteifung
- 129: ringförmige Nut

- a: Radialspalt
- α: Winkel
- L: Hebelarm

- S1: Dichtungsfläche Motorseite
- S2: Dichtungsfläche Getriebeseite (zwischen 119b und 113)
- S3: Dichtungsfläche Getriebeseite (zwischen 119b, 119c und 115)

## Patentansprüche

1. Ausrückvorrichtung (100) für eine Reibungskupplung eines Kraftfahrzeuges, umfassend
- ein Führungsrohr (107);
- eine Schiebehülse (101), welche auf dem Führungsrohr (107) axial verschiebbar ist und wenigstens eine radiale und axiale Öffnung (102, 103) umfasst;
- einen Halteabschnitt (104), an welchem ein Halteblech (105) befestigt ist, welches ein selbstjustierendes Ausrücklager (110) an einen Flansch der Schiebehülse (101) drückt;
- das Ausrücklager (110), welches einen drehfest zu der Schiebehülse (101) angeordneten äußeren Lagerring (111), zwischen dem äußeren und einem inneren Lagerring (111, 113) angeordnete Wälzkörper (112) und einen umlaufenden inneren Lagerring (113) umfasst, wobei der innere Lagerring (113) im Gebrauch mit einem Betätigungselement der Reibungskupplung in Wirkverbindung steht; **dadurch gekennzeichnet, dass** die Ausrückvorrichtung (100) weiterhin folgende Merkmale aufweist:
- eine Schleuderscheibe (115), welche mit dem inneren Lagerring (113) verbunden ist; und
- ein erstes und zweites Dichtelement (118, 122), welche mit dem äußeren Lagerring (111) verbunden sind; wobei
- das Halteblech (104) wenigstens eine radiale Öffnung (108) umfasst;
- die Schleuderscheibe (115) mit dem Flansch der Schiebehülse (101) einen umlaufenden Spalt (124) ausbildet;
- die Schleuderscheibe (115) eine konzentrische Strömung innerhalb der Ausrückvorrichtung (110) erzeugt; und
- das erste Dichtelement (118) mit dem inneren Lagerring (113) und der Schleuderscheibe (115) eine Dichtstruktur ausbildet.

2. Ausrückvorrichtung (100) nach dem vorhergehenden Anspruch, **dadurch gekennzeichnet, dass** die radiale und die axiale Öffnung (102, 103) am Außenrand der Schiebehülse (101) und die radiale Öffnung (108) am Außenrand des Halteblechs (105) angeordnet ist.

3. Ausrückvorrichtung (100) nach einem der vorhergehenden Ansprüche, **dadurch gekennzeichnet, dass** sich die radiale und die axiale Öffnung (102, 103) der Schiebehülse (101) nach außen verjüngt.

4. Ausrückvorrichtung (100) nach einem der vorhergehenden Ansprüche, **dadurch gekennzeichnet, dass** die Strömung Verschmutzungen aus dem Ausrücklager (110) über die radiale Öffnung (102) der Schiebehülse (101) und/oder die radiale Öffnung (108) des Halteblechs (105) mitreißt.

5. Ausrückvorrichtung (100) nach einem der vorhergehenden Ansprüche, **dadurch gekennzeichnet, dass** die Strömung Wärme aus dem Ausrücklager (110) über die radiale und/oder axiale Öffnung (102, 103) der Schiebehülse (101) und/oder die radiale Öffnung (108) des Halteblechs (105) mitreißt.

6. Ausrückvorrichtung (100) nach einem der vorhergehenden Ansprüche, **dadurch gekennzeichnet, dass** die Dichtelemente (118, 122) eine Labyrinthdichtung ausbilden.

7. Ausrückvorrichtung (100) nach einem der vorhergehenden Ansprüche, **dadurch gekennzeichnet, dass** die Dichtelemente (118, 122) wenigsten zwei Dichtlippen (119) umfassen, welche nach außen gerichtet sind.

8. Ausrückvorrichtung (100) nach dem vorhergehenden Anspruch, **dadurch gekennzeichnet, dass** die sich zwischen den Dichtlippen (119) befindenden Bereiche einen Aufnahmebereich (120) für ein Sperrmittel (121) ausbilden.

9. Ausrückvorrichtung (100) nach Anspruch 8, **dadurch gekennzeichnet, dass** das Sperrmittel (121) ein Schmiermittel, ein Fett und/oder eine Paste ist.

10. Ausrückvorrichtung (100) nach einem der vorhergehenden Ansprüche, **dadurch gekennzeichnet, dass** das erste Dichtelement (118) eine verdickte Wurzel aufweist, welche eine erste, eine zweite und eine dritte Dichtlippe mit einer X-Form umfasst.

11. Ausrückvorrichtung (100) nach dem vorhergehenden Anspruch, **dadurch gekennzeichnet, dass** sich zwischen der dritten Dichtlippe des ersten Dichtelements (118) und einer Dichtfläche, gegen welche die zweite Dichtlippe abdichtet, ein Radialspalt bildet.

12. Ausrückvorrichtung (100) nach einem der vorhergehenden Ansprüche, **dadurch gekennzeichnet, dass** das zweite Dichtelement (122) eine verdickte Wurzel aufweist, welche eine erste und eine zweite Dichtlippe mit einer Y-Form umfasst.

13. Ausrückvorrichtung (100) nach dem vorhergehenden Anspruch, **dadurch gekennzeichnet, dass** sich zwischen der zweiten Dichtlippe des zweiten Dichtelements (122) und einer Dichtfläche, gegen welche die erste Dichtlippe abdichtet, ein Radialspalt bildet.

14. Ausrückvorrichtung (100) nach einem der vorhergehenden Ansprüche, **dadurch gekennzeichnet, dass** sich zwischen der ersten und der zweiten Dichtlippe des zweiten Dichtelements (122) eine ringförmige Nut als Aufnahmebereich für ein Sperrmittel (121) ausbildet.

## Claims

1. Release device (100) for a friction clutch of a motor vehicle, comprising
- a guide tube (107),
- a sliding sleeve (101) which is axially displaceable on the guide tube (107) and comprises at least one radial and axial opening (102, 103);
- a holding portion (104), on which a holding plate (105) is attached, which presses a self-adjusting release bearing (110) against a flange of the sliding sleeve (101);
- the release bearing (110) which comprises an outer bearing ring (111), which is rotationally fixed to the sliding sleeve (101), rolling bodies (112), which are disposed between the outer and an inner bearing ring (111, 113), and a surrounding inner bearing ring (113) comprises, wherein the inner bearing ring (113), during use, is in operative connection with an actuating element of the friction clutch;
**characterised in that** the release device (100)
further comprises the following features:
- a centrifugal disk (115), which is connected to the inner bearing ring (113), and
- a first and second sealing element (118, 122), which are connected to the outer bearing ring (111);
wherein
- the holding plate (104) comprises at least one radial opening (108);
- the centrifugal disk (115) forms a surrounding gap (124) with the flange of the sliding sleeve (101);
- the centrifugal disk (115) generates a concentric flow within the release device (110); and
- the first sealing element (118) forms a sealing structure with the inner bearing ring (113) and the centrifugal disk (115).

2. Release device (100) according to the preceding claim, **characterised in that** the radial and the axial opening (102, 103) are disposed at the outer edge of the sliding sleeve (101) and the radial opening (108) is disposed at the outer edge of the holding plate (105).

3. Release device (100) according to one of the preceding claims, **characterised in that** the radial and the axial opening (102, 103) of the sliding sleeve (101) taper outwardly.

4. Release device (100) according to one of the preceding claims, **characterized in that** the flow entrains contaminants from the release bearing (110) via said radial opening (102) of the sliding sleeve (101) and / or via the radial opening (108) of the holding plate (105).

5. Release device (100) according to one of the preceding claims, **characterized in that** the flow entrains heat from the release bearing (110) via the radial and / or axial opening (102, 103) of the sliding sleeve (101) and / or via the radial opening (108) the holding plate (105).

6. Release device (100) according to one of the preceding claims, **characterized in that** the sealing elements (118, 122) form a labyrinth seal.

7. Release device (100) according to one of the preceding claims, **characterized in that** the sealing elements (118, 122) comprise at least two sealing lips (119) which are directed outwardly.

8. Release device (100) according to the preceding claim, **characterised in that** those regions that are located between the sealing lips (119) form a receiving area (120) for a barrier means (121).

9. Release device (100) according to claim 8, **characterized in that** the barrier means (121) is a lubricant, a grease and / or a paste

10. Release device (100) according to one of the preceding claims, **characterised in that** the first sealing element (118) has a thickened root comprising a first, a second and a third sealing lip with an X shape.

11. Release device (100) according to the preceding claim, **characterised in that** a radial gap is formed between the third sealing lip of the first sealing element (118) and a sealing surface, against which the second sealing lip seals.

12. Release device (100) according to one of the preceding claims, **characterised in that** the second sealing element (122) has a thickened root comprising a first and a second sealing lip with a Y shape.

13. Release device (100) according to the preceding claim, **characterised in that** a radial gap is formed between the second sealing lip of the second sealing element (122) and a sealing surface, against which the first sealing lip seals.

14. Release device (100) according to one of the preceding claims, **characterised in that** an annular groove forms between the first and second sealing lip of the second sealing element (122) as reservoir for a barrier means (121).

## Revendications

1. Dispositif de débrayage (100) pour l'embrayage à friction d'un véhicule à moteur, comprenant
- un tuyau de guidage (107) ;
- une douille coulissante (101) qui peut être poussée dans le sens axial sur le tuyau de guidage (107) et qui entoure au moins une ouverture radiale et une ouverture axiale (102, 103) ;
- une section d'arrêt (104) sur laquelle est fixée une plaque de retenue (105) qui presse un palier de débrayage s'auto-ajustant (110) sur une bride de la douille coulissante (101) ;
- le palier de débrayage (110), qui entoure un corps de circulation (112) disposé entre la bague de palier extérieure et une bague de palier intérieure (111, 113) de façon solidaire en rotation par rapport à la bague de palier extérieure (111) de la douille coulissante (101) et une bague de palier intérieure (113) périphérique, sachant que la bague de palier intérieure (113) a une connexion effective avec un élément d'actionnement de l'embrayage à friction ;
**caractérisé par le fait que** le dispositif de débrayage (100) présente en outre les caractéristiques suivantes :
- un disque d'éjection (115), qui est relié à la bague de palier intérieure (113) ; et
- un premier et un deuxième élément d'étanchéité (118, 122) qui sont reliés à la bague de palier extérieure (111) ;
sachant que
- la plaque de retenue (104) entoure au moins une ouverture radiale (108) ;
- le disque d'éjection (115) forme un interstice périphérique (124) avec la bride de la douille coulissante (101) ;
- le disque d'éjection (115) produit un courant concentrique à l'intérieur du dispositif de débrayage (110), et
- le premier élément d'étanchéité (118) forme une structure d'étanchéité avec la bague de palier intérieure (113) et le disque d'éjection (115).

2. Dispositif de débrayage (100) selon la revendication précédente, **caractérisé par le fait que** l'ouverture radiale et l'ouverture axiale (102, 103) sont disposées sur le bord extérieur de la douille coulissante (101) et l'ouverture radiale est disposée sur le bord extérieur de la plaque de retenue (105).

3. Dispositif de débrayage (100) selon une des revendications précédentes, **caractérisé par le fait que** l'ouverture radiale et l'ouverture axiale (102, 103) de la douille coulissante (101) s'amincit vers l'extérieur.

4. Dispositif de débrayage (100) selon une des revendications précédentes, **caractérisé par le fait que** le courant emporte les saletés loin du dispositif de débrayage (110) par l'intermédiaire de l'ouverture radiale (102) de la douille coulissante (101) et/ou de l'ouverture radiale (108) de la plaque de retenue (105).

5. Dispositif de débrayage (100) selon une des revendications précédentes, **caractérisé par le fait que** le courant emporte la chaleur du dispositif de débrayage (110) par l'intermédiaire de l'ouverture radiale et/ou axiale (102, 103) de la douille coulissante (101) et/ou de l'ouverture radiale (108) de la plaque de retenue (105).

6. Dispositif de débrayage (100) selon une des revendications précédentes, **caractérisé par le fait que** les éléments d'étanchéité (118, 122) forment un joint à labyrinthe.

7. Dispositif de débrayage (100) selon une des revendications précédentes, **caractérisé par le fait que** les éléments d'étanchéité (118, 122) comprennent au moins deux lèvres d'étanchéité (119) qui sont orientées vers l'extérieur.

8. Dispositif de débrayage (100) une des revendications précédentes, **caractérisé par le fait que** les zones se trouvant entre les lèvres d'étanchéité (119) constituent une zone de réception (120) pour un agent bloquant (121).

9. Dispositif de débrayage (100) selon la revendication 8, **caractérisé par le fait que** l'agent bloquant (121) est un lubrifiant, une graisse et/ou une pâte.

10. Dispositif de débrayage (100) selon une des revendications précédentes, **caractérisé par le fait que** le premier élément d'étanchéité (118) présente une racine épaissie qui entoure une première, une seconde et une troisième lèvre d'étanchéité ayant une forme en X.

11. Dispositif de débrayage (100) selon une des revendications précédentes **caractérisé par le fait qu'**un interstice radial se forme entre la troisième lèvre d'étanchéité du premier élément d'étanchéité (118) et une surface d'étanchéité contre laquelle la seconde lèvre d'étanchéité réalise l'étanchéité.

12. Dispositif de débrayage (100) selon une des revendications précédentes **caractérisé par le fait que** le deuxième élément d'étanchéité (122) présente une racine épaissie qui entoure une première et une deuxième lèvre d'étanchéité avec une forme en Y.

13. Dispositif de débrayage (100) selon une des revendications précédentes **caractérisé par le fait qu'**un interstice radial se forme entre la seconde lèvre d'étanchéité du deuxième élément d'étanchéité (122) et une surface d'étanchéité contre laquelle la seconde lèvre d'étanchéité réalise l'étanchéité.

14. Dispositif de débrayage (100) selon une des revendications précédentes **caractérisé par le fait qu'**une rainure en forme d'anneau se forme en tant que zone de réception pour un agent de blocage (121) entre la seconde lèvre d'étanchéité du deuxième élément d'étanchéité (122).
